# EUROPÄISCHE PATENTSCHRIFT

(11) **EP 3 616 960 B1**
(45) Veröffentlichungstag und Bekanntmachung des Hinweises auf die Patenterteilung: **01.06.2022**
(21) Anmeldenummer: 19191412.6
(22) Anmeldetag: 13.08.2019
(51) Int. Cl.: B60K 17/28

(54) **KRAFTFAHRZEUG**
MOTOR VEHICLE
VÉHICULE AUTOMOBILE

(30) Priorität: 21.08.2018 DE 202018104795 U
(43) Veröffentlichungstag der Anmeldung: 04.03.2020
(73) Patentinhaber: Saeta GmbH & Co. KG, 22880 Wedel (DE)
(72) Erfinder: DIETSCH, Christian, 64653 Lorsch (DE); TAMM, Matthias, 25524 Itzehoe (DE)
(74) Vertreter: Hauck Patentanwaltspartnerschaft mbB

(56) Entgegenhaltungen:
- DE-A1- 10 201 365
- DE-U1- 9 212 000
- US-A1- 2010 078 234

## Beschreibung

Die Erfindung betrifft ein Kraftfahrzeug, insbesondere einen LKW, umfassend ein mit einem Antriebsmotor des Kraftfahrzeugs verbundenes Antriebsgetriebe, einen mit einem Nebenausgang des Antriebsgetriebes verbundenen Nebenabtrieb, und ein mit dem Nebenabtrieb verbundenes Nebenaggregat.

Antriebsgetriebe von Kraftfahrzeugen, wie LKW, weisen häufig einen mit einem Nebenausgang des Antriebsgetriebes verbundenen Nebenabtrieb (Power Take Off PTO) auf. Mit dem Nebenabtrieb können Nebenaggregate verbunden werden, die dann über den Antriebsmotor angetrieben werden können.

Es ist bekannt, Nebenaggregate über Gelenkwellen mit dem Nebenabtrieb zu verbinden. Nachteilig ist hierbei, dass nur ein begrenzter Achs- und Winkelversatz möglich sind. Darüber hinaus ist mit einer Gelenkwelle eine konstruktionsbedingte Mindestlänge verbunden, was zu einer erheblichen Baugröße führt. Gerade im Bereich hinter dem Antriebsgetriebe steht nur ein geringer Bauraum zur Verfügung, der nicht zuletzt aufgrund zusätzlicher Komponenten, beispielsweise eines Abgasnachbehandlungssystems, weiter reduziert wird. Auch herrschen in diesem Bereich besonders hohe Temperaturen, die das Nebenaggregat belasten können. Gelenkwellen besitzen außerdem einen erheblichen Wartungsbedarf, der bei Vernachlässigung zu Schäden am Nebenaggregat führen kann. Auch ist eine offen drehende Gelenkwelle immer eine potenzielle Gefahrenquelle. Es ist vorgeschlagen worden, Nebenaggregate ohne Gelenkwelle direkt an den Nebenabtrieb anzuflanschen, so dass das Nebenaggregat sich entgegen der Vorwärtsfahrtrichtung des Kraftfahrzeugs gesehen im Wesentlichen direkt an das Antriebsgetriebe anschließt. Indem auf eine Gelenkwelle verzichtet wird, können zwar die hiermit verbundenen Nachteile vermieden werden. Das Problem der hohen Temperaturbelastung, und dass in diesem Anordnungsbereich eines Kraftfahrzeugs aus den erläuterten Gründen nur ein geringer Bauraum zur Verfügung steht, wird hierdurch jedoch nicht gelöst.

Aus US 2010/0078234 A1 ist ein Hybridantrieb bekannt, bei dem ein Nebenaggregat auf gleicher Höhe mit einem Nebenabtrieb unterhalb eines Antriebsgetriebes angeordnet ist.

Ausgehend von dem erläuterten Stand der Technik liegt der Erfindung die Aufgabe zugrunde, ein Kraftfahrzeug der eingangs genannten Art bereitzustellen, bei dem ein Nebenaggregat unter Berücksichtigung des begrenzten Bauraums und mit möglichst geringer auf das Fahrzeuggetriebe wirkenden Hebellast angeordnet werden kann.

Die Erfindung löst die Aufgabe durch den Gegenstand von Anspruch 1. Vorteilhafte Ausgestaltungen finden sich in den abhängigen Ansprüchen, der Beschreibung und den Figuren.

Für ein Kraftfahrzeug der eingangs genannten Art löst die Erfindung die Aufgabe dadurch, dass das Nebenaggregat derart mit dem Nebenabtrieb gekoppelt ist, dass das Nebenaggregat unterhalb des Antriebsgetriebes angeordnet ist.

Bei dem Kraftfahrzeug kann es sich insbesondere um einen Lastkraftwagen (LKW) handeln. Es kann sich insbesondere um einen LKW mit Abgasnachbehandlung handeln. Der LKW kann mindestens die Abgasnorm Euro 6 erfüllen. Das Antriebsgetriebe des Kraftfahrzeugs verbindet den Antriebsmotor mit der Antriebsachse des Kraftfahrzeugs und treibt so die Antriebsachse an. Der Antriebsmotor ist dabei insbesondere der Hauptantriebsmotor des Kraftfahrzeugs. Das Antriebsgetriebe kann gemeinsam mit dem Antriebsmotor einen Antriebsblock bilden und beispielsweise mit entsprechender Bewegung gefedert an einem Trägerrahmen des Kraftfahrzeugs aufgehängt sein.

Erfindungsgemäß ist das Nebenaggregat derart mit dem Nebenabtrieb gekoppelt, dass das Nebenaggregat unterhalb des Antriebsgetriebes mit seinem Nebenabtrieb angeordnet ist. Sofern in diesem Zusammenhang Positions- oder Richtungsangaben, wie oben, unten oder dergleichen verwendet werden, bezieht sich dies auf die Betriebsposition des Kraftfahrzeugs. Eine Richtung nach unten entspricht demnach der Schwerkraftrichtung. Bei der Erfindung befindet sich das Nebenaggregat also in einem Bereich unterhalb des Antriebsgetriebes des Kraftfahrzeugs. Ermöglicht wird diese Anordnung durch die Kopplung des Nebenabtriebs mit dem Nebenaggregat. Die Kopplung ist in besonders praxisgemäßer Weise durch ein Nebengetriebe realisiert. Dieses Nebengetriebe kann Teil des Nebenaggregats sein. Der Nebenabtrieb umfasst eine Nebenabtriebswelle, mit der das Nebengetriebe verbunden ist.

Bei der Erfindung ist das Nebenaggregat in einem Bereich angeordnet, der nicht oder kaum durch Komponenten des Kraftfahrzeugs belegt ist. Die zum Stand der Technik erläuterten Bauraumprobleme werden erfindungsgemäß somit vermieden. Insbesondere befindet sich das Nebenaggregat bei der Erfindung im Gegensatz zum Stand der Technik nicht in einem Bereich, in dem andere Komponenten, wie beispielsweise Komponenten der Abgasnachbehandlung, angeordnet sind. Unterhalb des Antriebsgetriebes ist auch die Temperaturbelastung erheblich geringer als in der Nähe von Komponenten zur Abgasnachbehandlung. Damit ist das Nebenaggregat im Betrieb erheblich geringeren Temperaturen ausgesetzt als die Nebenaggregate des Standes der Technik. Es ergibt sich somit eine geringere Belastung und damit robustere Anordnung des Nebenaggregats. Darüber hinaus wird durch die erfindungsgemäße Anordnung des Nebenaggregats die Hebelbelastung des Nebenabtriebs, insbesondere seines Gehäuses, wesentlich verringert.

Gemäß einer Ausgestaltung kann es sich bei dem Kraftfahrzeug um einen Lastkraftwagen mit einem Ladebehälter, beispielsweise ein Silofahrzeug, handeln. Das Nebenaggregat kann entsprechend ein Entladeaggregat zum Entladen eines Ladeguts aus dem Ladebehälter des Lastkraftwagens sein. Das Entladeaggregat kann zum Beispiel ein Pumpenaggregat sein. Bei dem zu entladenden Ladegut kann es sich zum Beispiel um ein Schüttgut, beispielsweise ein staubförmiges Siloschüttgut, handeln. Es kann sich aber beispielsweise auch um eine Flüssigkeit oder ein Gas handeln. Die Flüssigkeit kann zum Beispiel eine Lebensmittelflüssigkeit sein, wie ein Speiseöl oder dergleichen, oder zum Beispiel ein Kraftstoff für Fahrzeuge, oder ein beliebiges anderes Fluid.

Nach einer weiteren Ausgestaltung kann das Nebenaggregat ein Kompressor sein. Beispielsweise kann es sich um einen Schraubenkompressor handeln. Es könnte sich aber auch beispielsweise um einen Flügelradkompressor handeln. Kompressoren sind besonders gut geeignet zum Entladen von Schüttgut oder eines Fluids aus einem Ladebehälter eines Lastkraftwagens.

Das Nebenaggregat kann sich gemäß einer weiteren Ausgestaltung ausgehend von der Kopplung mit dem Nebenabtrieb, insbesondere ausgehend von dem (Neben-)Getriebe im Wesentlichen in Vorwärtsfahrtrichtung des Kraftfahrzeugs erstrecken. Das Nebenaggregat kann sich in dem Kraftfahrzeug, beispielsweise dem LKW, also nach vorn erstrecken. Der Nebenabtrieb erstreckt sich ausgehend von dem Antriebsgetriebe regelmäßig entgegen der Vorwärtsfahrtrichtung des Kraftfahrzeugs. Durch die vorgenannte Ausgestaltung wird die Anordnung des Nebenaggregats unterhalb des Antriebsgetriebes ermöglicht. Dabei können eine Nebenabtriebswelle und eine Aggregatswelle des Nebenaggregats im Wesentlichen parallel verlaufen, wobei der Kraftfluss zwischen diesen Wellen durch die Kopplung, insbesondere das (Neben-)getriebe, um etwa 180° umgedreht sein kann.

Gemäß einer weiteren Ausgestaltung kann das Nebenaggregat ohne Gelenkwelle mit dem Nebenabtrieb gekoppelt sein. Durch diese direkte Kopplung des Nebenaggregats mit dem Nebenabtrieb, insbesondere über das (Neben-)Getriebe kann im Vergleich zu einer Verbindung mit Gelenkwelle ein größerer Achs- und Winkelversatz sowie ein geringerer Bauraum erreicht werden. Das (Neben-)Getriebe kann insbesondere die einzige Verbindung des Nebenaggregats mit dem Nebenabtrieb bilden.

Ein Ausführungsbeispiel der Erfindung wird nachfolgend anhand von Figuren näher erläutert. Es zeigen schematisch:
- Figur 1: einen Teil eines erfindungsgemäßen Kraftfahrzeugs in einer Seitenansicht, und
- Figur 2: den Teil aus Figur 1 in einer perspektivischen Ansicht.

Soweit nichts anderes angegeben ist, bezeichnen in den Figuren gleiche Bezugszeichen gleiche Gegenstände.

In den Figuren ist ein Trägerrahmen 10 eines erfindungsgemäßen Kraftfahrzeugs, vorliegend eines LKW, gezeigt. Bei dem LKW kann es sich beispielsweise um ein Silofahrzeug handeln. An dem Trägerrahmen 10 ist ein in einen Antriebsblock integriertes Antriebsgetriebe 12 des Kraftfahrzeugs aufgehängt. Das Antriebsgetriebe 12 ist mit einem Antriebsmotor des Kraftfahrzeugs, insbesondere dem Hauptantriebsmotor des Kraftfahrzeugs, verbunden, der ebenfalls in den Antriebsblock integriert sein kann.

Es ist weiterhin ein mit einem Nebenausgang des Antriebsgetriebes 12 verbundener Nebenabtrieb 14 vorgesehen, mit dem ein Nebengetriebe 16 einerseits verbunden ist. Das Nebengetriebe 16 ist andererseits mit einem Nebenaggregat 18, vorliegend einem Kompressor 18, verbunden. Das Nebengetriebe 16 kann Teil des Nebenaggregats 18 sein. Der Kompressor 18 kann beispielsweise zum Entladen eines Schüttguts aus einem Ladebehälter eines Silofahrzeugs vorgesehen sein. Selbstverständlich sind auch andere Anwendungen möglich.

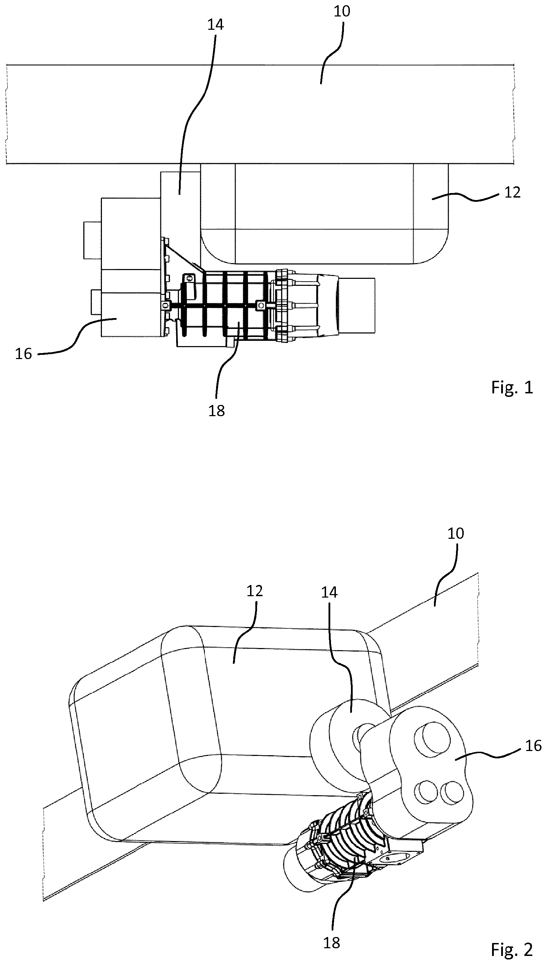

Figur 1 zeigt die Anordnung in der Betriebsposition des Kraftfahrzeugs. In Figur 1 ist zu erkennen, dass sich das Nebenaggregat 18 unterhalb des Antriebsgetriebes 12 mit seinem Nebenabtrieb 14 befindet. Insbesondere erstreckt sich das Nebenaggregat 18 ausgehend von dem Nebengetriebe 16 in Vorwärtsfahrtrichtung des Kraftfahrzeugs, in Figur 1 nach rechts. Hierzu bildet das Nebengetriebe 16 ein Umlenkgetriebe mit einer Getriebeumlenkung von 180°. Das Nebenaggregat 18 ist in dem dargestellten Beispiel ohne Gelenkwelle mit dem Nebenabtrieb 14 gekoppelt. Insbesondere stellt in dem dargestellten Beispiel das Nebengetriebe 16 die einzige Verbindung zwischen dem Nebenabtrieb 14 und dem Nebenaggregat 18 dar.

### Bezugszeichenliste

- 10: Trägerrahmen
- 12: Antriebsgetriebe
- 14: Nebenabtrieb
- 16: Nebengetriebe
- 18: Nebenaggregat

## Patentansprüche

1. Kraftfahrzeug, insbesondere LKW, umfassend ein mit einem Antriebsmotor des Kraftfahrzeugs verbundenes Antriebsgetriebe (12), einen mit einem Nebenausgang des Antriebsgetriebes (12) verbundenen Nebenabtrieb (14), und ein mit dem Nebenabtrieb (14) verbundenes Nebenaggregat (18), **dadurch gekennzeichnet, dass** das Nebenaggregat (18) derart mit dem Nebenabtrieb (14) durch ein Nebengetriebe (16) gekoppelt ist, dass das Nebenaggregat (18) unterhalb des Antriebsgetriebes (12) mit seinem Nebenabtrieb (14) angeordnet ist, und dass der Nebenabtrieb (14) eine Nebenabtriebswelle umfasst, mit der das Nebengetriebe (16) verbunden ist.

2. Kraftfahrzeug nach Anspruch 1, **dadurch gekennzeichnet, dass** es sich um einen Lastkraftwagen mit einem Ladebehälter handelt, und dass das Nebenaggregat (18) ein Entladeaggregat zum Entladen eines Ladeguts aus dem Ladebehälter des Lastkraftwagens ist.

3. Kraftfahrzeug nach einem der vorhergehenden Ansprüche, **dadurch gekennzeichnet, dass** das Nebenaggregat (18) ein Kompressor (18) ist.

4. Kraftfahrzeug nach einem der vorhergehenden Ansprüche, **dadurch gekennzeichnet, dass** sich das Nebenaggregat (18) ausgehend von der Kopplung mit dem Nebenabtrieb (14) in Vorwärtsfahrtrichtung des Kraftfahrzeugs erstreckt.

5. Kraftfahrzeug nach einem der vorhergehenden Ansprüche, **dadurch gekennzeichnet, dass** das Nebenaggregat (18) ohne Gelenkwelle mit dem Nebenabtrieb (14) gekoppelt ist.

## Claims

1. A motor vehicle, in particular a truck, comprising a drive transmission (12) connected to a drive engine of the motor vehicle, a power take-off (14) connected to an auxiliary output of the drive transmission (12), and an auxiliary unit (18) connected to the power take-off (14), **characterized in that** the auxiliary unit (18) is coupled to the power take-off (14) by means of an auxiliary transmission (16) in such a way that the auxiliary unit (18) is arranged below the drive transmission (12) with the power take-off (14) thereof, and **in that** the power take-off (14) comprises a power take-off shaft to which the auxiliary transmission (16) is connected.

2. The motor vehicle according to claim 1, **characterized in that** it is a truck having a loading container, and **in that** the auxiliary unit (18) is an unloading unit for unloading an item of cargo from the loading container of the truck.

3. The motor vehicle according to any one of the preceding claims, **characterized in that** the auxiliary unit (18) is a compressor (18).

4. The motor vehicle according to any one of the preceding claims, **characterized in that** the auxiliary unit (18) extends proceeding from the coupling with the power take-off (14) in the forward travel direction of the motor vehicle.

5. The motor vehicle according to any one of the preceding claims, **characterized in that** the auxiliary unit (18) is coupled to the power take-off (14) without a cardan shaft.

## Revendications

1. Véhicule automobile, en particulier un camion, comportant une transmission d'entraînement (12) reliée à un moteur d'entraînement du véhicule automobile, une prise de force auxiliaire (14) reliée à une sortie auxiliaire de la transmission d'entraînement (12), et un groupe auxiliaire (18) relié à la prise de force auxiliaire (14), **caractérisé en ce que** le groupe auxiliaire (18) est accouplé de telle façon à la prise de force auxiliaire (14) par une transmission auxiliaire (16), que le groupe auxiliaire (18) est disposé sous la transmission d'entraînement (12) avec sa prise de force auxiliaire (14), et **en ce que** la prise de force auxiliaire (14) comporte un arbre de sortie auxiliaire, auquel est reliée la transmission auxiliaire (16).

2. Véhicule automobile selon la revendication 1, **caractérisé en ce qu'**il s'agit d'un camion avec un conteneur de chargement, et **en ce que** le groupe auxiliaire (18) est un groupe de déchargement pour le déchargement de marchandises à partir du conteneur de chargement du camion.

3. Véhicule automobile selon l'une des revendications précédentes, **caractérisé en ce que** le groupe auxiliaire (18) est un compresseur (18).

4. Véhicule automobile selon l'une des revendications précédentes, **caractérisé en ce que** le groupe auxiliaire (18) s'étend à partir de l'accouplement avec la prise de force auxiliaire (14) dans la direction de marche avant du véhicule automobile.

5. Véhicule automobile selon l'une des revendications précédentes, **caractérisé en ce que** le groupe auxiliaire (18) est accouplé à la prise de force auxiliaire (14) sans arbre articulé.
